# EUROPEAN PATENT APPLICATION

(11) **EP 0 997 804 A1**
(43) Date of publication of application: **03.05.2000**
(21) Application number: 99500199.7
(22) Date of filing: 28.10.1999
(51) Int. Cl.: G05D 7/01, G05D 16/06

(54) **Improved self-blocking regulator**

(30) Priority: 29.10.1998 AR 1005424
(71) Applicant: Mustafá, Jorge Ismael, 1069 Buenos Aires (AR)
(72) Inventor: Mustafá, Jorge Ismael, 1069 Buenos Aires (AR)
(74) Representative: Urizar Anasagasti, José Antonio

(57) **Abstract**

Self-blocking regulator. Including a superior chamber (b) of variable volume, inside of which there is a pressure balancing spring (15) connected in its superior part to a stopper (16) and in its inferior part to a diaphragm (13), connected at the same time with an activator bolt and said bolt to a fork of rotation that can be operated by means of the activation of a pushing bolt. Said diaphragm (13) separates the superior chamber (b) from the inferior chamber connected with an inlet hole (3) and an outlet duct (25). The variations in pressure existing between the superior and inferior chambers are registered by the diaphragm that connects to a cam (8) arranged in the inferior chamber. Said cam rotates on an axis (9) contacting one of the ends of an inlet stopper (4) disposed in a cavity in such a way that it can be shifted. Said cavity has a first part with a greater diameter where the body of the inlet stopper (4) is arranged, which receives the pressure exerted by the entrance of fluid from the inlet hole and the force of expansion of a holding spring. When the inlet of fluid is liberated due to a failure, the pressure on the body of the inlet stopper (4) increases, that shifts shutting the opening of the cavity with which the passage of fluid into the regulator is interrupted. If the pressure of the inferior chamber decreases, the diaphragm (13) will act on the cam (8) pushing the inlet stopper towards the inlet hole allowing the retrieval of the circuit of passage of the fluid.

## Description

### Background of the invention

The present invention relates to an improved self-blocking regulator, and its aim is to provide a single-stage regulator with its outlet being able to block automatically when the flow is greater than the normal feeding values, and at the same time it provides a regulator that works as a check valve, preventing the inlet of fluid to enter even when the supply valve is open.

### Brief description of the drawings

In order to understand clearly the object of the invention, the same is illustrated with various drawings, in which it has been represented as one of its preferred embodiments as an illustrative example without this limiting the scope of said invention, wherein
Figure 1 is a diagram of a transversal section of a regulator,
Figure 2 is a diagram of a transversal section of another embodiment of the invention,
Figure 3 is a diagram of a partial section of a detail where the mechanism of the movement of the cam can be seen.

In the different figures, same reference numbers indicate equal or corresponding parts.

List of main references
(1) inferior part of the body of the regulator
(2) external wall of the body of the regulator
(3) inlet hole
(4) body of the inlet stopper
(5) head of the body of the inlet stopper
(5") o'ring
(6) head of the inlet stopper
(6') o'ring
(6") o'ring of the outlet stopper
(7) cavity
(8) cam
(9) rotation axis of the cam
(10) front part of the cam
(11) support that transmits de movement of the cam
(12) inferior coupling
(13) diaphragm
(14) superior coupling
(15) pressure balance spring
(16) stop of the pressure balance spring
(17) lid
(18) activation bolt
(19) head of the activation bolt
(20) rotation axis
(21) back part of the fork
(22) front part of the fork
(23) body of the pushing bolt
(23') threading of the pushing bolt
(24) booster lift of the pushing bolt
(24') head of the pushing bolt
(24") flywheel
(25) outlet duct
(26) holding spring
(27) superior body of the regulator
(28) plate
(28') threading
(28") screws
(29) intermediate piece
(29') piece transmitter of movement
(30) outlet channel
(31) passage
(31') widening
(32) pushing spring of the outlet stopper
(33) threaded base
(34) body of the outlet stopper
(34') inclined plane of the outlet stopper
(35) regulator end
(36) cam axis support
(36') stopper disc
(37) articulation axis
(38) head of the cam
(a) inlet part
(b) superior chamber
(c) pushing bolt
(d) outlet part

### Main object

The present invention refers to an improved self-blocking regulator that works as an automatic check valve that prevents the inlet of fluid to the regulator even when the supply valve is open, and, once it is activated, it works as a flow regulator and a supply blocking when said flow is greater than the normal values.

Although self-blocking regulator are known in the art, all of them work basing on a same principle that is to allow the entering of the fluid to a first stage of decompression in which the pressure of storage is drastically reduced to a pressure of use or a medium pressure in a second stage where the it is reduced to pressure of use.

Between this first stage and the next, the existent regulators require the activation of a starting-up switch, which is independent from the diaphragm.

It is in the second stage, when the fluid already has pressure values reduced to the necessities of usage when the self-blocking mechanisms are effective.

Due to the above mentioned the present invention is effective under circumstances in which the known mechanisms fail, such as, for example, in the case of damage in the body of the regulator, breaking of the diaphragm or failure in the gasketing of the starting-up switch.

The present invention is an effective way to prevent accidents caused by failure in the equipment such as breakage of ducts, breakage of the regulator, breakage of supply valves and failure or breakage originated by external cause, such as thermal differences, fire, the activity of cutting elements, mechanical pressure, etc.

### Detailed description of the preferred embodiments

In general terms the improved self-blocking regulator aims to provide an element having an activation function as an automatic check valve, a function as a regulator for the supply of the fluid and a protection function by means of an automatic blocking of the supply when the same reaches abnormal values. Particularly, the described invention provides a security element, not existent previously, such that, said self-blocking takes place even in situations not taken into account by previous inventions.

The set works in the following way:

The improved self-blocking regulator, object of the present invention has been produced fundamentally as a holding valve, which usually works shut, being this the reason why, when the gas passage is opened from the respective supply valve (not shown) the gas in the container (not shown) does not enter inside the regulator.

In order to achieve the entering of the fluid, it will be necessary to activate the regulator acting on the pushing bolt (c) in a direct form pulling from said bolt or in a indirect form acting on the back part of the fork (21). In the last case, pressure will have to be applied on the head of the pushing bolt (24') so, overpowering the hold of the booster lift of the pushing bolt (24) shifting the body of the pushing bolt (23) compressing it against the lid (17) to exert pressure on said back part of the fork (21) making it rotate on the rotation axis (20) in order to lift de activation bolt (18) which is attached to the front part of the fork (22) with which it locks due to the head of the activator bolt (19).

The lifting of the activator bolt (18) causes the diaphragm (13) to deform pulling from the cam (8) and making it rotate on the rotation axis of the cam (9), with which the front part of the cam (10) will push the head of the inlet stopper (6) compressing it against the o'ring (6') and pushing the body of the inlet stopper (4), the head of the body of the inlet stopper (5) compressing the holding spring (26), and decompresses the o'ring (5") allowing the entrance of the fluid from the inlet hole (3) towards the cavity (7).

Said cavity (7) shows a first part with a greater diameter and another part, with a smaller diameter conforming a passage communicating the part of the inlet (a) and the outlet (b) o fthe body of the regulator.

The body of the inlet stopper (4) is a guide for the narrowest part of the same, keeping it at equal distance form the edges of the passage communicating the cavity (7) and the inferior chamber (not in the references) ensuring the passing of fluid due to the difference in diameter between said narrower part and the passage.

When fluid is required it enters the inferior chamber towards the outlet duct (25), producing a decrease in pressure in said inferior chamber while the pressure in the superior chamber (b) is kept constant, this fact pushes the diaphragm (13) downwards.

When the diaphragm (13) dofrms towards the inferior chamber, the activator bolt (18) attached to the same by means of a superior coupling (14) and an inferior coupling (12), will push the cam (8) attached to the support that transmits movement (11) making it rotate around the rotation axis of the cam (9) provided on the support of the axis (36) allowing the inlet stopper (4) to shift towards the inside of the inferior chamber.

As the head of the inlet stopper (6) separates from its bearing in the mouth of the passage of communication, the passage of fluid towards the outlet duct (25) increases, with a more pronounced difference in pressure between the inferior chamber and the superior chamber (b) due to which the pressure balancing spring (15) arranged between the diaphragm (13) and its stopper (16) will act expanding itself forcing the diaphragm to deform even more.

Such increase in the deformation of the diaphragm (13) allows that, due to the shift permitted by the cam (8), a bigger part of the inlet stopper (4) can penetrate in the inferior chamber clearing the opening consequently increasing the flow of fluid directed towards the outlet duct (25).

Such shift causes that, in the opposite end of the cavity (7) the body of the inlet stopper (4) to reduce gradually the amount of fluid entering into said cavity (7) until it is stopped completely when the o'ring (5") is compressed against the edges of the passage opening due to the combination of the pressure exerted by the fluid entering by the inlet hole (3) together with the pressure exerted by the expansion of the holding spring (26).

In order to vary the balance of pressures adapting them to the necessities of the different containers, in another embodiment, the body of the pushing bolt (23) presents a threading (23') that joins it with a thread provided in the superior part of the regulator (27).

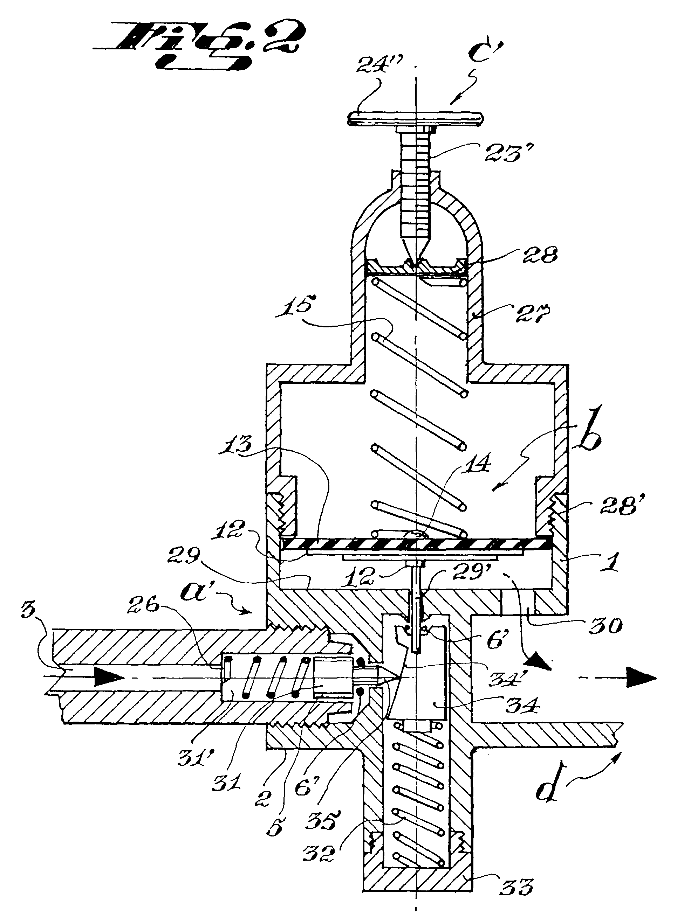

In the superior part of the pushing bolt (c) a flywheel (24") is provided which, when being actuated produces the compression and decompression of the pressure balancing spring (15) by means of the modification of the position of the plate (28) on which the same leans, as it can be seen in Figure 2.

When the distance between said plate (28) and the diaphragm (13) increases or decreases the strength in the expansion of the pressure balancing spring (15) is modified and thus the pressure of the superior chamber (b).

In the above mentioned embodiment, the greatest pressure deforms the diaphragm (13) causing the shifting of the part that transmits movement (29') that pushes the body of the outlet stopper (34) clearing the passage of the fluid towards the outlet channel (30) and compressing the pushing spring of the outlet stopper (32) against the threaded base (33).

When the outlet stopper (34) is pushed, the inclined plane (34') that said stopper presents to the regulator end (35) enables that due to the expansion of the holding spring (26) arranged in the widening (31') between the edge and the head of the body of the inlet stopper (5), the same exerts pressure against the o'ring (6') obstructing the passage of fluid entering from the inlet hole (3) and through the passage (31).

When the pressure in the superior chamber (b) decreases the diaphragm (13) drags the part that transmits movement (29') and this, at the same time drags the body of the outlet stopper (34) with its inclined plane (34') will push the end regulator (35) liberating the passage of fluid. If, by chance the depression in the superior chamber (b) is important, the inclined plane (34') would push de end regulator (35) clearing a space being each time bigger, allowing more fluid to enter from the inlet hole (3).

However, as the body of the outlet stopper pushes the regulator end (35), the passage of fluid through the passage provided in the intermediate piece (29) is shut, compressing the o'ring (6') against its bearing.

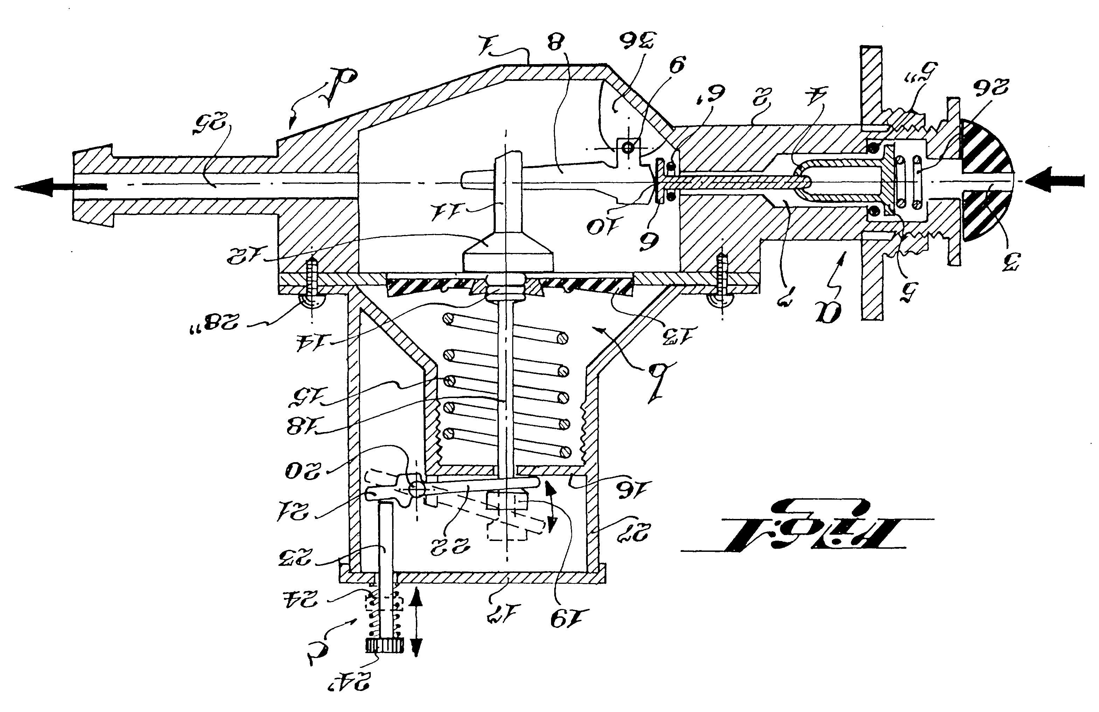

The superior body of the regulator (27) is coupled to the inferior body of the same (1) by means of a plurality of screws (28") as it can be seen in figure 1, or threading by means of a screw (28") provide in said superior body of the regulator (27) and the intermediate piece (29) constituting an alternative embodiment represented in Figure 2.

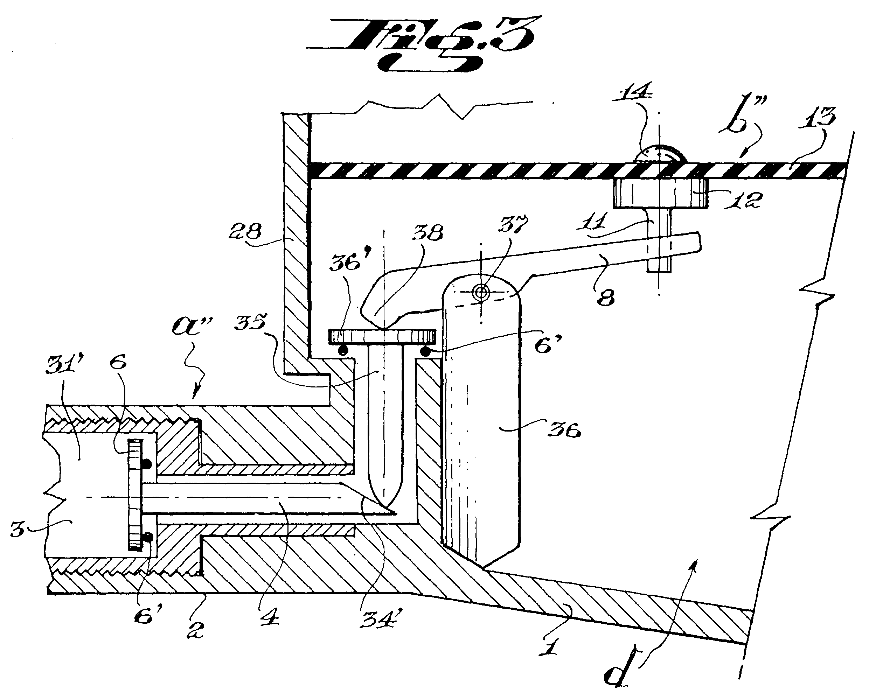

In another embodiment represented in a detail enlarged in figure 3, the described mechanism can be observed, due to which the compression results simple with reference to the explanations already mentioned in the present invention.

Said figure shows the axis of articulation (37) of the cam (8) coupled to a piece supporting the axis (36) of a format different to the one of the same piece in figure 1, fundamentally conditioned by the available space depending on the different type of regulators.

When the diaphragm (13) deforms the movement is transmitted by the support that transmits movement (11) of the cam (8) to which it is coupled, the head of the cam (38) acting against the stopper disc (36') that controls the passage of fluid from the inlet hole (3).

it is certain that being the present invention put into practice, modifications concerning certain details in construction and shape may be introduced without this implying drawing apart from the fundamental principles that are clearly substantiated in the clauses of the following claims:

Having thus specially described and determined the nature of the present invention, and how it can be carried out, it is declared as of exclusive right and property:

## Claims

1. Improved self-blocking regulator, of the type known as single-stage, provided with an inlet hole of a pressurized fluid connected to a container of the same, and with a duct for the passage of the fluid towards a chamber connected to an outlet duct, characterized because said regulator presents a superior chamber of variable volume which includes an activator bolt and a pressure balancing spring developed between a stopper and a deformation diaphragm, that can be transmitted to a cam provided with a rotation axis to a piece of support arranged in an inferior chamber, connected to an inlet duct and an outlet duct; the front of the cam having a plurality of contacting spots with an inlet stopper disposed in a shifting manner inside a cavity with a first part of a greater diameter than the rest; the inlet stopper having a body that includes a first part of greater diameter than the rest arranged in said first part of the cavity, said inlet stopper shifts between one position of the stopper of the hole of said first part of greater diameter and an open position of a left portion and an opening position of the opening of said first part of greater diameter and stopper of the opening of the left part, and in which body of the inlet stopper the force of expansion of a resilient holding means is applied and the pressure of the fluid entering through the inlet hole and its activator bolt connects with a fork its back part connects to the body of a pushing bolt.

2. Improved self-blocking regulator as claimed in claim 1 wherein the fork is mounted in a form that it can rotate on an axis and the pushing bolt is provided with a booster lift and a head.

3. Improved self-blocking regulator as claimed in claims 1 and 2 wherein the head of the body of the inlet stopper has a regulator end connected with the inclined plane of the body of the outlet stopper connected at its inferior end with a pushing spring of the outlet stopper arranged between the same and a threaded base, and the body of the outlet stopper is connected to a piece that transmits movement of a diaphragm that is part of the inferior base of a superior chamber of variable volume that contains a pressure balancing spring arranged between said diaphragm and a plate connected to the body of the pushing bolt.
